# NEUE EUROPÄISCHE PATENTSCHRIFT

(11) **EP 0 287 992 B2**
(45) Veröffentlichungstag und Bekanntmachung des Hinweises auf die Entscheidung über den Einspruch: **09.12.1998**
(45) Hinweis auf die Patenterteilung: 22.06.1994
(21) Anmeldenummer: 88106148.5
(22) Anmeldetag: 18.04.1988
(51) Int. Cl.: H04L 12/28, H04B 1/74

(54) **Hochverfügbares serielles Bussystem**
Readily available serial bus system
Système de bus série à haute disponibilité

(30) Priorität: 24.04.1987 DE 3713825
(43) Veröffentlichungstag der Anmeldung: 26.10.1988
(73) Patentinhaber: SIEMENS AKTIENGESELLSCHAFT, 80333 München (DE)
(72) Erfinder: Clauss, Martin, Dipl.-Ing., D-7500 Karlsruhe (DE); Egle, Fridolin, Dipl.-Ing., D-7552 Durmersheim (DE); Hammer, Gerhard, Dipl.-Ing., D-6729 Neupotz (DE); Vukas, Nikola, Dipl.-Ing., D-7500 Karlsruhe (DE)

(56) Entgegenhaltungen:
- EP-A- 0 052 390
- DE-A- 3 145 893
- US-A- 4 630 265
- TELCOM REPORT, Band 8, Nr. 3, Mai/Juni 1985, Seiten 208-213; K. SPIESS et al.: "Erhöhte Betriebssicherheit von 2-Mbit/s-Übertragungsstrecken"
- Lieferschein 1-336'800 an EPTCO, Alexandria, Egypt, mit dazugehöriger Beschreibung PROCONTROL P42, 31.01.86,Seite 4
- Systembeschreibung PROCONTROL P13/42 (BBC Druckschrift Nr. CH-T 100 424 D, Februar 1982, Seiten 10-16
- Schaltschema des Buskoppelgeräts 70 BK 02 a-E PROCONTROL 42, 24.06.83

## Beschreibung

Die Erfindung betrifft ein hochverfügbares Bussystem mit mindestens zwei Busleitungen gemäß der Merkmale des Oberbegriffs des Anspruchs 1.

Für Datenübertragungsaufgaben, insbesondere in dezentralisierten Automatisierungssystemen, werden vielfach serielle Bussysteme eingesetzt, wobei über den Bus die Kommunikation zwischen den dezentralen, z. T. weiträumig verteilten Datenübertragungsteilnehmern abgewickelt wird. Dem Bus kommt im Gesamtsystem hierbei eine zentrale Bedeutung zu, weshalb an ihn hohe Verfügbarkeitsanforderungen gestellt werden. Diese hohe Verfügbarkeit läßt sich durch eine redundante Ausführung mit zwei Bussen als Übertragungswege erzielen, wie sie beispielsweise in "Regelungstechnische Praxis", 26. Jahrgang, 1984, Heft 9, Seiten 39 bis 41 im Aufsatz "Bussysteme" unter dem Kapitel 5.4 "Hochzuverlässige Bussysteme" beschrieben ist. Die Steuerung der redundanten Übertragungswege in diesem Datenübertragungssystem ist so auszulegen, daß ständig beide Übertragungswege zu überprüfen sind und mit geeigneten Umschaltkriterien fehlerfrei alle Datenübertragungsteilnehmer auf den fehlerfreien Übertragungsweg zu schalten sind. Die Umschaltung der Datenübertragungsteilnehmer soll dabei schnell und möglichst ohne Datenverlust ausgeführt werden.

Bei bekannten Bussystemen werden beispielsweise zur Funktionsprüfung und Steuerung der redundanten Busse zyklisch Testnachrichten ausgesendet und besondere Steuernachrichten ausgeführt. Die dazu notwendigen Vorgänge laufen in allen Busanschaltungen der Datenübertragungsteilnehmer ab. Sie erfordern einen nicht unerheblichen Organisationsaufwand und reduzieren dabei die effektiv nutzbare Übertragungskapazität des Bussystems.

Aus der EP-A-0 052 390 ist ein hochverfügbares Bussystem bekannt, bei dem einer der Datenübertragungsteilnehmer in einem starren Zeittakt Testnachrichten in Form von Prüfpaketen an die anderen Teilnehmer aussendet, die mittels einer Empfangsschaltung ausgewertet werden. Eine nachgeschaltete Auswertelogik erzeugt bei fehlerhaften Prüfpaketen ein Umschaltsignal für den Empfang von einer anderen Busleitung sowie ein Meldesignal zur Anzeige einer fehlerhaften Busleitung.

Aus der Beschreibung des Buskoppelgeräts 70BK 02a-E des Kraftwerkleitsystems PROCONTROL P42 der BBC ist ein hochverfügbares Bussystem bekannt, bei welchem in zwei Bussen eine Detektierlogik vorhanden ist, die ein Prüfzeichen auswertet. Als Prüfzeichen wird die Adresse herangezogen, die den Nachrichten beigefügt ist. Tritt auf einer Busleitung keine Adresse auf, so wird diese als fehlerhaft erkannt und auf die andere Busleitung umgeschaltet. Nachteilig dabei ist, daß lediglich die Existenz einer Adresse in den Nachrichten ausgewertet wird und Fehler, die kurzzeitig auftreten, nicht erkannt werden.

Der Erfindung liegt die Aufgabe zugrunde, bei einem hochverfügbaren Bussystem der eingangs genannten Art eine geeignete Funktionsprüfung der Busse so ausführbar zu machen, daß auch bei kurzen Fehleroffenbarungszeiten nur wenig von der im System verfügbaren Übertragungskapazität verbraucht wird und die beteiligten Teilnehmer minimal belastet werden.

Zur Lösung dieser Aufgabe weist ein hochverfügbares Bussystem der eingangs genannten Art die Merkmale des Kennzeichens des Anspruchs 1 auf.

Beim erfindungsgemäßen Bussystem wird in vorteilhafter Weise ausgenutzt, daß auf beiden Übertragungswegen (Busse) die gleichzeitig ausgesendeten Datentelegramme empfangsseitig bei jedem Teilnehmer auf ein oder mehrere charakteristische, in jedem Datentelegramm generell enthaltene Zeichen (Synchronisations- und Prüfzeichen) mittels einer einfachen Detektierlogik untersucht werden können. Beispielsweise sind bei bestimmten vorgegebenen Telegrammformaten, wie beim sogenannten Token-Bus nach IEEE 802.4, in jedem Datentelegramm für Synchronisierzwecke ein Start-Begrenzersignal und ein Ende-Begrenzersignal vorhanden. Diese Start-/Ende-Begrenzer werden als Prüfzeichen ausgenutzt, wobei jedes fehlerfrei empfangene Prüfzeichen über Detektier- bzw. Auswertelogik weitergereicht wird. Mit ihr kann auf einfache Weise ein Umschaltkriterium erzeugt werden, damit empfangsseitig am Ende einer Nachrichtenübertragung von jedem Teilnehmer autark, d. h. ohne Rücksicht auf die übrigen Teilnehmer, eine Umschaltung auf den fehlerfreien Übertragungsweg vorgenommen werden kann.

Diese sogenannte Redundanzsteuerung kann auch bei unterschiedlichsten, von Grund auf nicht auf Redundantbetrieb ausgerichteten hochintegrierten Bussteuerbausteinen im Teilnehmer angewendet werden.

Vorteilhaft kann mit dem erfindungsgemäßen Bussystem zusätzlich auch eine Statusmeldung über den Zustand der Busse sowie ein befehlsgesteuertes Zuschalten auf einen bestimmten Bus ohne großen Aufwand ausgeführt werden. Möglich sind auch statistische Langzeitdiagnosen der redundanten Busse.

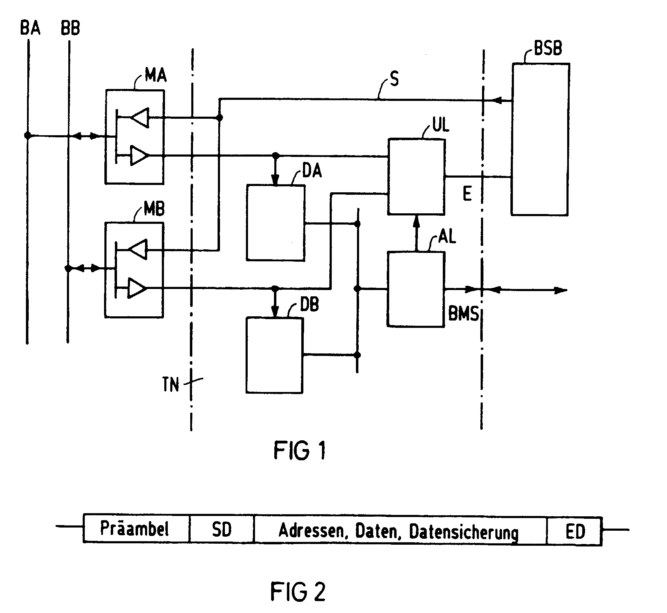

Die Erfindung wird anhand der Figuren erläutert, wobei Figur 1 ein Blockschaltbild eines Teils des erfindungsgemäßen Bussystems mit der Anschaltung eines Teilnehmers und Figur 2 ein Datentelegramm mit einem vorgegebenen Format darstellt.

In der Figur 1 sind als Übertragungswege ein Bus BA und ein Bus BB dargestellt, die jeweils über ein Modem MA und ein Modem MB mit dem Teilnehmer TN verbunden sind. Im Teilnehmer TN ist das Modem MA auf eine Detektierlogik DA und das Modem MB auf eine Detektierlogik DB geführt. Die Ausgänge der Detektierlogik-Schaltungen DA und DB sind auf eine Auswertelogik AL geführt, die ein Umschaltsignal für eine Umschaltlogik UL abgibt. Ferner ist in der Figur 1 ein Bussteuerbaustein BSB des Teilnehmers TN dargestellt. Die Auswertelogik AL ist weiterhin über eine Bus-Management-Steuerung BMS mit dem hier nicht dargestellten Kommunikationsprozessor des Teilnehmers TN verbunden. Die Umschaltlogik UL gibt ein Empfangssignal E an den Bussteuerbaustein BSB ab. und der Bussteuerbaustein BSB gibt ein Sendesignal S sowohl an das Modem MA als auch an das Modem MB ab.

Gemäß der Figur 2 ist aus dem dargestellten Datentelegramm insbesondere die Anordnung der Start- und Ende-Begrenzersignale SD, ED als Prüfzeichen zu entnehmen. Diese Prüfzeichen werden in den jeweiligen Detektierlogik-Schaltungen DA und DB auf ihr einwandfreies Erscheinen untersucht und in der Auswertelogik miteinander verglichen. Ist ein Prüfzeichen fehlerhaft, so wird ein entsprechendes Umschaltkriterium erzeugt und in der Umschaltlogik UL der Empfang auf den jeweils fehlerfreien Bus BA oder BB umgeschaltet. Das gleiche gilt für den Sendevorgang über den Bussteuerbaustein BSB. Über die Bus-Management-Steuerung ist hierbei auch ein willkürliches Umschalten auf bestimmte Busse, gesteuert vom Kommunikationsprozessor des Teilnehmers TN, auf einfache Weise möglich.

## Patentansprüche

1. Hochverfügbares Bussystem
- mit mindestens zwei Busleitungen (BA, BB), über die jeweils identische Nachrichten seriell übertragen werden,
- mit einer Detektierlogik (DA, DB) für jeden der mindestens zwei Busse (BA, BB) in den Teilnehmern zur Funktionsprüfung der Busse, in der Prüfzeichen ausgewertet werden, und
- mit einer nachgeschalteten Auswertelogik, die bei fehlerhaften Prüfzeichen ein Umschaltsignal für den Empfang von einer anderen, fehlerfreien Busleitung sowie ein Meldesignal zur Anzeige einer fehlerbehafteten Busleitung erzeugt,
**dadurch gekennzeichnet,**
- daß in einem vorgegebenen Übertragungsformat der Nachrichten ein Synchronisiersignal in Form des Start- und Ende-Begrenzersignals (SD, ED) als Prüfzeichen herangezogen wird.

## Claims

1. Fault-tolerant bus system
- having at least two bus lines (BA, BB), by way of which respective identical messages are transmitted serially,
- having a detection logic (DA, DB) for each of the at least two buses (BA, BB) in the stations for functional testing of the buses, in which detection logic test signals are evaluated, and
- having an evaluation logic connected downstream which, in the case of faulty test signals, generates a changeover signal for reception from another fault-free bus line as well as an alarm signal for indicating a faulty bus line,
characterised in that
- in a preselected transmission format of the messages a synchronization signal in the form of the start and end limiter signal (SD, ED) is used as the test signal.

## Revendications

1. Système de bus à haute disponibilité comportant
- au moins deux lignes de bus (BA, BB), par l'intermédiaire desquelles sont transmises en série des informations identiques, et
- une unité logique (DA,DB) de détection pour chacun des au moins deux bus dans les éléments participant au contrôle fonctionnel, dans laquelle sont évalués des signes de contrôle, et
- une unité logique d'évaluation branchée en aval, qui produit, dans le cas de signes de contrôle défectueux, un signal de commutation pour la réception d'une autre ligne de bus non défectueuse, ainsi qu'un signal de signalisation pour l'indication d'une ligne de bus défectueuse,
caractérisé par le fait
- qu'il est utilisé, dans un format de transmission déterminé à l'avance des informations, comme signe de contrôle, un signal de synchronisation sous la forme d'un signal de limitation de début et de fin (SD, ED).
